# FASCICULE DE BREVET EUROPEEN

(11) **EP 0 571 620 B1**
(45) Date de publication et mention de la délivrance du brevet: **13.09.1995**
(21) Numéro de dépôt: 93902311.5
(22) Date de dépôt: 09.12.1992
(51) Int. Cl.: B62M 3/08

(54) **DISPOSITIF DE MONTAGE ET DE DEMONTAGE RAPIDE D'UN AXE PAR EXEMPLE DE PEDALE**
VORRICHTUNG ZUR SCHNELLEN MONTIERUNG UND DEMONTIERUNG EINER ACHSE, Z.B. EIN FAHRRADPEDAL
DEVICE FOR QUICK MOUNTING AND REMOVAL OF A SHAFT, SUCH AS A PEDAL SHAFT

(30) Priorité: 09.12.1991 FR 9115204
(43) Date de publication de la demande: 01.12.1993
(73) Titulaire: Tranvoiz, René, 92500 Rueil-Malmaison (FR)
(72) Inventeur: Tranvoiz, René, 92500 Rueil-Malmaison (FR)
(74) Mandataire: Pinguet, André
(86) Numéro de dépôt international: FR9201164
(87) Numéro de publication internationale: WO9311990

(56) Documents cités:
- EP-A- 0 031 627
- CH-A- 242 269
- DE-B- 87 537
- DE-B- 93 373
- DE-B- 1 257 613
- FR-A- 965 381
- FR-A- 1 025 780
- US-A- 1 507 206

## Description

La présente invention a pour but la réalisation d'un axe, par exemple, de pédale à montage et à démontage rapide sur un levier ou sur un bras de manivelle, par exemple, de pédalier.

De nombreux brevets ont été déposés concernant des dispositifs de montage de pédales sur la manivelle d'un grand pignon par exemple. Le brevet allemand DE,B,87537 divulgue un système dans lequel l'extrémité de fixation de l'axe de la pédale sur la manivelle présente une tête oblongue destinée à être insérée dans une lumière de même forme oblongue pratiquée dans l'extrémité libre de la manivelle. Une fois la tête insérée dans la lumière, une rotation d'un quart de tour permet à la tête de se placer en travers de la lumière. Le serrage de la pédale sur la manivelle est obtenu par vissage d'un écrou prévu sur l'axe de la pédale du côté opposé à la tête oblongue.

Le brevet allemand DE,B, 93373 décrit un système de montage dans lequel la mise en place ou le retrait de la pédale de la manivelle ne nécessite pas la dépose de la vis de fixation sur l'axe de la pédale. Pour ce faire, la tête de la vis est engagée par une fente au travers de l'extrémité libre de la manivelle puis positionnée sur un organe de butée. Le vissage de la vis à cet endroit permet l'assujettissement de la pédale sur la manivelle.

Un brevet américain US-A-1,507,206 divulgue un axe de pédale présentant une extrémité d'axe lisse et creuse destinée à être engagée dans un logement lisse de même forme et de même taille à l'extrémité libre de la manivelle. L'extrémité d'axe creuse est filetée et reçoit une vis qui sert à la fixation de la pédale sur la manivelle.

Dans les trois documents susmentionnés, le montage et le démontage de la pédale n'est possible qu'à l'aide d'une clé appropriée pour le serrage et le desserrage de la vis et d'un autre outil pour le blocage en rotation de l'axe de la pédale lors de l'opération de vissage.

Dans un autre dispositif divulgué par le document EP-A-0 316 627, le blocage en rotation de la partie d'axe pénétrant dans l'évidement de la manivelle est réalisé par une bille sollicitée par un ressort sur une portée présentant un relief structuré solidaire de l'axe de la pédale, alors que le maintien de l'axe de la pédale dans l'évidement de la manivelle est réalisé par un simple écrou. Le problème posé dans ce document était de pouvoir faire varier la longueur de la manivelle, et pour ce faire, l'axe principal de la pédale est monté de façon excentrique par rapport à la partie d'axe pénétrant dans l'évidement de la manivelle. La rotation de l'axe principal autour de la partie d'axe permet de faire varier la longueur de la manivelle. Le système à bille sert de moyen de blocage de la pédale dans la position voulue et non au maintien de la pédale sur la manivelle. Le réglage en position de la pédale, c'est-à-dire la position de l'axe principal par rapport à la partie d'axe pénétrant dans la manivelle, est réalisable sans l'intervention d'un outil par pédalage en sens inverse. Cependant, le démontage de la pédale elle-même de la manivelle nécessite l'utilisation d'une clé apppropriée à la taille de l'écrou.

Le brevet FR-965 381 divulgue un système de fixation de pédale sur une manivelle dans lequel une bague extérieurement cylindrique est reçue dans un évidement ménagé en bout de manivelle. La bague présente un logement conique et l'axe de la pédale présente une partie également conique. Le bout d'axe de la manivelle est pourvu d'un alésage fileté destiné à recevoir un boulon pour le serrage de la portée conique dans le logement conique de la bague. Le montage et le démontage de la pédale nécessite donc également l'utilisation d'un outil approprié.

A l'heure actuelle, les axes de pédale sont fabriqués avec un filetage à gauche pour la pédale de gauche et filetage à droite pour la pédale de droite, ce qui nécessite un outil pour bloquer les pédales sur leurs manivelles : opération longue et fastidieuse, de plus les pédales représentent un encombrement supplémentaire lors du transport, du stockage et du rangement, en particulier des cycles ou objets roulants équipés de pédales; d'où l'intérêt de pouvoir déposer rapidement sans outil spécial et avec un minimum d'efforts lesdites pédales.

La présente invention cherche à remédier à ces inconvénients et prévoit pour ce faire, un dispositif de montage et de démontage rapide d'une pédale sur une manivelle, de type standard comportant un évidement cylindrique fileté de section circulaire, ladite pédale comportant un axe pourvu d'une portée, caractérisé en ce qu'une bague est vissée dans l'évidement fileté de la manivelle, l'axe de la pédale étant reçu dans la bague par glissement longitudinal et comportant des moyens de retenue à actionnement manuel sans outil.

Selon un premier mode de réalisation, les moyens de retenue comportent sur l'axe un élément de retenue sollicité radialement vers l'extérieur par des moyens élastiques, ledit élément de retenue, à l'état monté de l'axe dans ladite bague, fait saillie vers l'extérieur par rapport à la portée dudit axe dans un logement solidaire de ladite manivelle pour empêcher un glissement longitudinal et une rotation relative de l'axe dans la bague, de sorte que la pédale est dégageable de la manivelle par simple poussée sur l'élément de retenue contre les moyens élastiques.

Selon une seconde mise en oeuvre, les moyens de retenue comportent une agrafe à l'extrémité de la portée du côté opposé à la pédale par rapport à la bague, ladite agrafe étant montée pivotante entre une position de retenue perpendiculaire audit axe et une position d'enlèvement de l'axe où elle est disposée axialement audit axe, de sorte à être dégagée au travers de la bague sans nécessité de séparation entre l'agrafe et l'axe.

Selon une forme de réalisation pratique de la seconde mise en oeuvre de l'invention, les moyens de retenue comportent en outre, au niveau de l'extrémité de l'axe de pédale à une distance au moins égale à la longueur de la bague, une rainure prolongée par un épaulement d'un diamètre inférieur à celui de la portée, ladite agrafe étant pourvue de deux bras dont les extrémités sont recourbées et viennent s'insérer dans un trou prévu diamétralement en fond de la rainure de l'axe et la différence de diamètre intérieur de la bague et du diamètre extérieur de l'épaulement étant au moins égale à l'épaisseur cumulée des deux branches de l'agrafe.

Selon une autre caractéristique, les moyens de retenue comportent un ressort sous forme de spire enroulée destinée à venir se positionner sur les filets faisant saillie de la bague prévue d'une largeur supérieure à l'évidement de la manivelle et dans lequel ledit ressort présente un prolongement de spire selon une partie incurvée en boucle destinée à venir s'insérer dans une gorge prévue sur l'axe au delà de l'extrémité de la bague pour assurer un maintien sans jeu et en pression.

En variante, la bague filetée, adaptable à la manivelle, comporte une partie faisant saillie de la manivelle dans laquelle sont prévues deux fenêtres diamétralement opposées pour permettre le passage et le blocage par rapport à la bague des deux fourches d'une agrafe, de maintien de l'axe qui est pourvu en vis à vis sur sa portée, d'une gorge.

Selon une autre forme de réalisation pratique de la seconde mise en oeuvre de l'invention, l'agrafe est réalisée sous forme d'un fil métallique élastique replié en U avec repli en extrémité des branches de l'agrafe en U en vis à vis ; la longueur de la portée lisse de l'axe étant égale à la longueur de l'évidement de sorte que, combiné au positionnement de l'agréfe immédiatement après la portée lisse, les extrémités des branches de l'agrafe soient en appui sur la partie opposée à la pédale de la manivelle, la rainure présentant une largeur correspondant à l'épaisseur des branches de l'agrafe et la profondeur de la rainure correspondant sensiblement à la moitié de l'épaisseur du fil de l'agrafe, de sorte à permettre :
- d'une part le maintien de l'agrafe perpendiculaire au plan de la rainure en position de retenue ;
- d'autre part un pivotement autour de l'axe défini par l'alésage et les deux extrémités des branches de l'agrafe, à 90° selon un plan correspondant à l'axe de pédale.

Selon une autre caractéristique, les branches de l'agrafe en U présentent en vue de côtés, au niveau des branches, un décrochement définissant des segments successifs disposés parallèlement et reliés au niveau du décrochement par une partie inclinée, de sorte à écarter l'extrémité de l'agrafe au niveau du fond de U, du bras de manivelle pour une facilité de manoeuvre.

Selon des caractéristiques communes à toutes les formes de mise en oeuvre, l'axe est maintenu sans jeu dans l'évidement de la manivelle par un ressort ou joint torique interposé, par exemple, entre l'épaulement de l'axe et la bague.

Selon une forme de réalisation pratique de la première mise en oeuvre de l'invention, l'élément de retenue est une bille montée sur un ressort positionné sur la portée de l'axe dans un alésage réalisé perpendiculairement à l'axe, la bille, à l'état monté de l'axe dans l'évidement de la manivelle, étant insérée dans une cavité prévue soit dans ledit évidement de la manivelle, soit latéralement et extérieurement à l'évidement du côté oposé à la pédale. Avantageusement, la cavité est définie par un perçage débouchant extérieurement au bras et dans lequel est prévu un organe de coulissement qui est destiné à repousser la bille.

En variante, l'axe est pourvu d'un alésage borgne et transversal et d'un alésage longitudinal qui l'intercepte, l'élément de retenue consistant en une butée positionnée dans l'alésage sur un ressort qui prend appui en fond d'alésage, un organe latéral de manoeuvre étant prévu pour actionner ladite butée au travers de l'alésage et ainsi l'insérer dans une découpe de la bague.

En variantes, l'axe et la portée correspondante présentent en section une forme polygonale, par exemple, carrée ou encore une section ou forme ovale dont le grand axe est préférentiellement disposé de façon perpendiculaire à l'axe des manivelles. Ses formes constituent des variantes d'une forme de base de la portée prévue cylindrique.

Les dessins ci-joints sont donnés à titre indicatif et non limitatif, ils représentent des modes particuliers de réalisation et permettent de mieux comprendre l'invention.

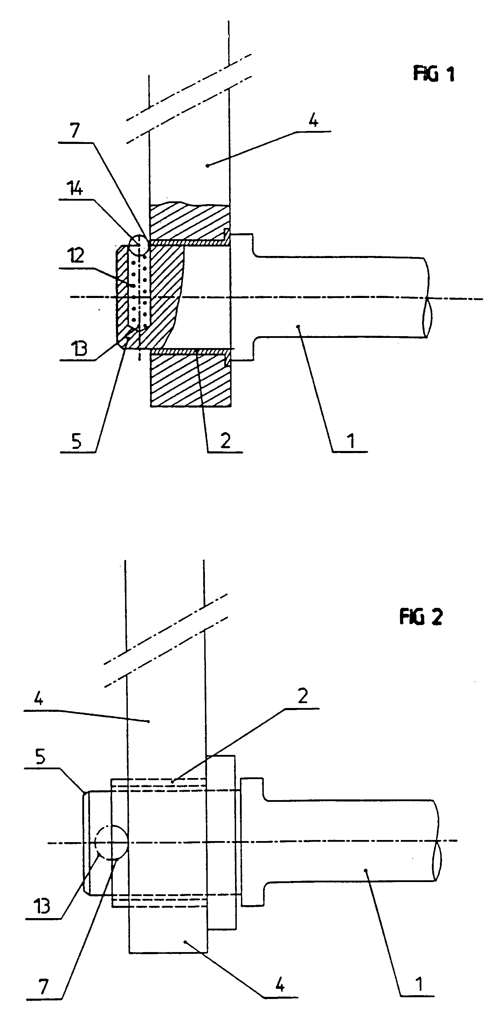

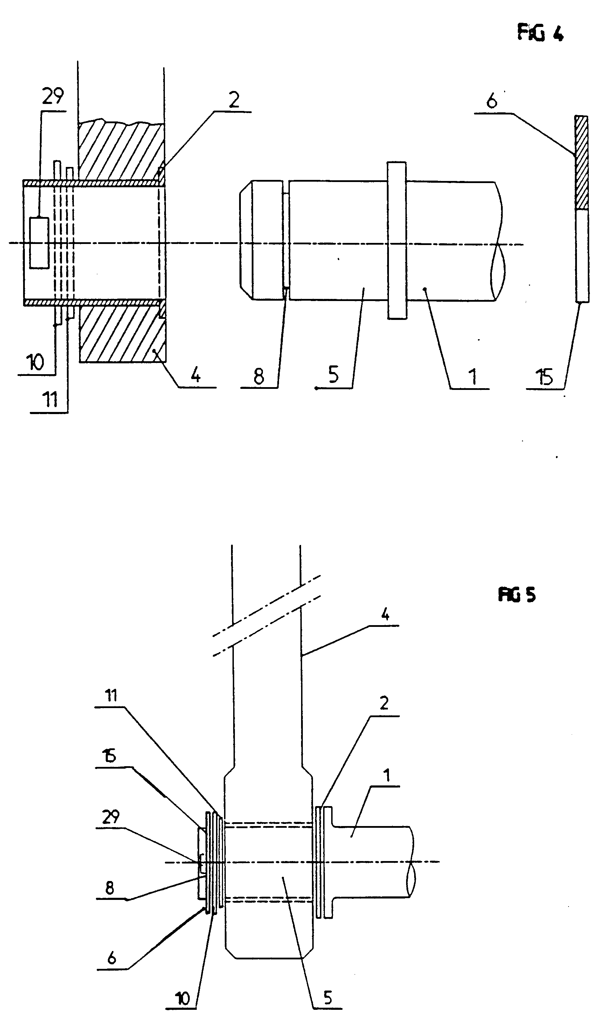

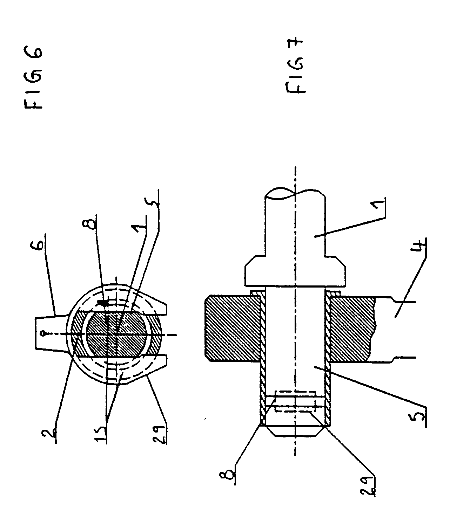

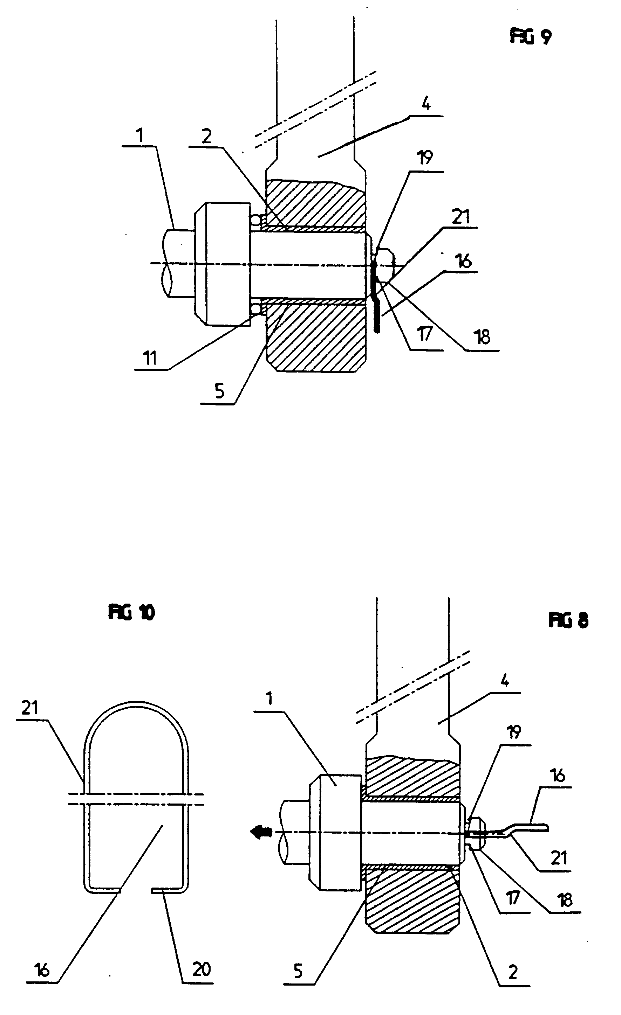

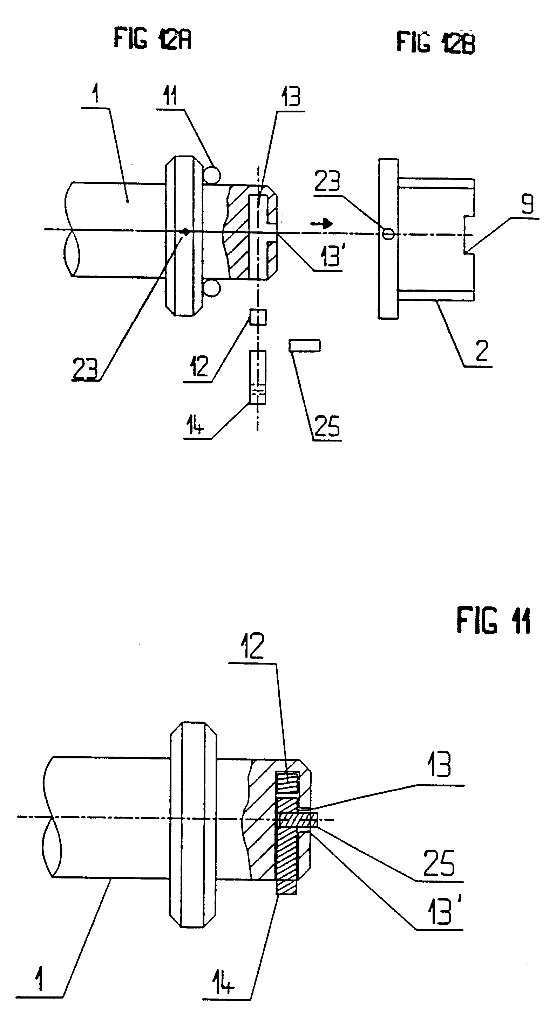

Les figures 1 et 2 représentent un axe (1) monté sur un bras de manivelle (4) par l'intermédiaire d'une bague (2). La portée (5) de l'axe (1) comporte dans un trou borgne (13) un ressort (12) et une bille ou une butée (14) de retenue venant se positionner en alignement dans une encoche de retenue en rotation (7) prévue sur le côté extérieur de la bague 2 opposé à la pédale.

La figure 4 représente un ensemble en coupe en vue eclatée comportant une bague (2) pourvue de fenêtres (29), et vue en coupe une agrafe (6) de retenue de l'axe (1), une rondelle (10) et un joint torique ou ressort (11) et la portée (5) avec gorge (8) de l'axe (1).

La figure 5 représente l'ensemble de la figure 4 monté avec le bras (4), l'axe (1) et sa portée (5) reçus dans la bague (2) dont les deux fenêtres (29) en vis à vis assurent le maintien des fourches (15) de l'agrafe (6) venant en appui elastique en travers des dites fenêtres (9) dans la gorge (8) de l'axe (1). La rondelle (10) et le joint torique ou ressort (11) assurent la compensation du jeu latéral éventuel de l'axe en prenant appui sur l'agrafe (6). La figure 6 représente en vue de coté, l'agrafe (6) avec ses fourches (15) faisant ressort, insérées dans la gorge (8) de la portée (5) de l'axe (1) au travers des fenêtres (29) de passage de la dite agrafe (6), prévues sur la bague (2) qui est montée, vissée sur le bras (4) tel qu'il apparaît en fig 7 en coupe axiale.

La figure 8 représente un axe (1) monté sur un bras de manivelle (4) par l'intermédiaire d'une bague filetée (2), la portée (5) de l'axe (1) est prolongée par une partie (18) de section plus faible munie d'une gorge (17) de retenue et d'un trou (19) de maintien d'une agrafe (16), représentée ici en position ouverte permettant le dégagement de l'axe au travers de la bague (2), l'agrafe (16) étant pourvue d'un décrochement (21).

La figure 9 représente de façon correspondante à la figure 8 l'axe (1) monté sur le bras de manivelle (4) par l'intermédiaire de la bague (2) lisse et solidaire du bras (4) par l'agrafe (16) rabattue à 90°, le décrochement (21) de l'agrafe (16) facilitant sa manipulation. Le joint torique (11) interposé entre l'épaulement de l'axe (1) et l'épaulement de serrage et d'appui en vis à vis de la bague servant à compenser les jeux et à maintenir l'agrafe en pression sur la bague et à faire étanchéité.

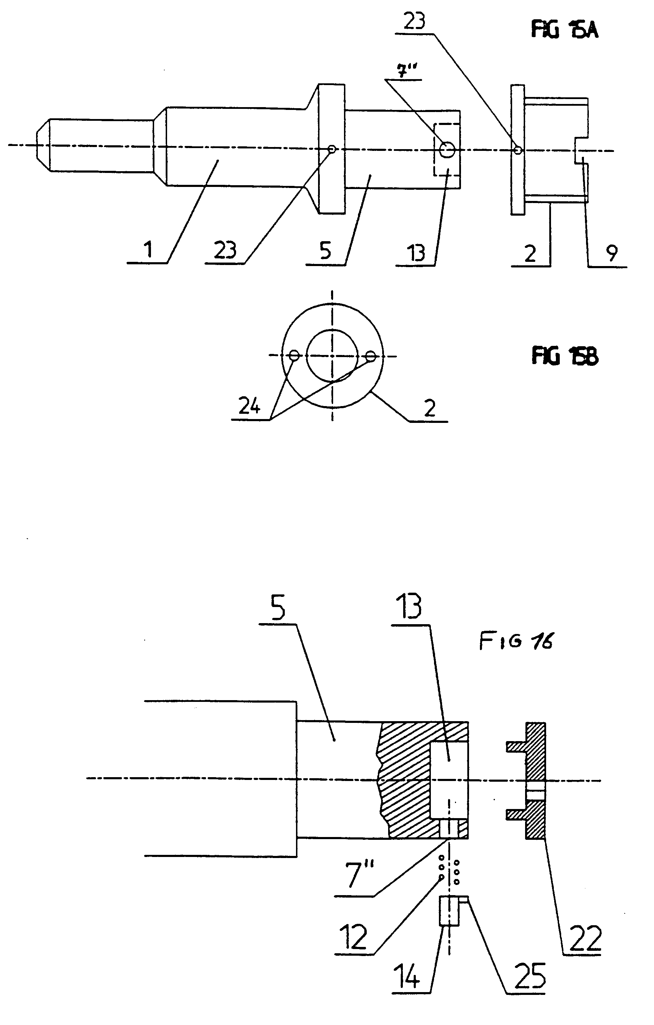

La figure 10 représente en vue de détail agrandie, l'agrafe (16) en vue de dessus dont les extrémités (20) des branches sont recourbées pour être reçues et maintenues dans les trous de la rainure (17), ces branches étant pourvues sur leurs longueurs du décrochement (21).

La figure 11 représente un axe (1) pourvu en extrémité de la partie lisse, d'un alésage borgne et transversal (13) et d'un alèsage longitudinal (13') qui l'intercepte ainsi qu'un ressort ou bloc élastomère (12) venant se placer en fond d'alèsage (13) pour agir sur une butée (14) actionnée en travers de l'alèsage (13') par un ergot de manoeuvre (25) qui en est solidaire perpendiculairement.

La figure 12 représente en éclaté l'axe (1) équipé près de son épaulement d'un joint torique (11) et dans lequel sont praticués les alèsages (13) et (13') perpendiculaires et non débouchants, le ressort (12), la butée (14) et son ergot (25) formant une sorte de verrou, la bague (2) munie d'un embrèvement (9) en extrémité pour la reception et la protection de l'extrémité de la butée (14) venant s'y loger évitant ainsi tout mouvement relatif, des index (23) pouvant être prévus sur l'épaulement de l'axe (1) et de la bague (2) pour faciliter la mise en place de la butée (14) dans l'embrèvement (9), lorsqu'ils sont placés en vis à vis .

La figure 13 représente un axe (1) avec gorge (8) et joint torique (11), une bague (2) avec filetage extérieur sur lequel est positionné un ressort (28) formé d'une spire enroulée au diamètre du filetage de la bague et qui se prolonge par une partie en boucle (27), pourvue en partie médiane d'une concavité (26) destinée à venir se loger dans la rainure (8) de l'axe (1).

La figure 14 represente l'ensemble de la fig 13 monté : l'axe (1) positionné dans la bague (2) sur la manivelle (4), la boucle (27) du ressort (28) positionnée dans la rainure (8) de l'axe (1) maintenant ledit axe en comprimant le joint torique (11) positionné entre l'épaulement de l'axe et de la butée.

Les figures 15 et 16 représentent d'une part un axe (1) dont la portée (5) est pourvue en extrémité et dans l'axe d'un trou borgne (13) dans lequel débouche latéralement un alèsage (7'') et d'autre part une bague (2) pourvue latéralement en extrémité d'un embrèvement ou découpe (9) dans laquelle va s'inserer une butée (14) avec ergot (25) de manoeuvre sous l'action du ressort ou bloc élastomère (12), loges dans l'évidement (13) et maintenus par un cache (22). L'épaulement de la bague (2) est pourvu de deux trous borgnes (24), disposés paralléle à l'axe de la bague (2), pour recevoir les ergots d'une clé de serrage afin d'assurer le blocage de la dite bague sur le bras (4) ; le blocage pouvant être complété si necessaire par un collage.

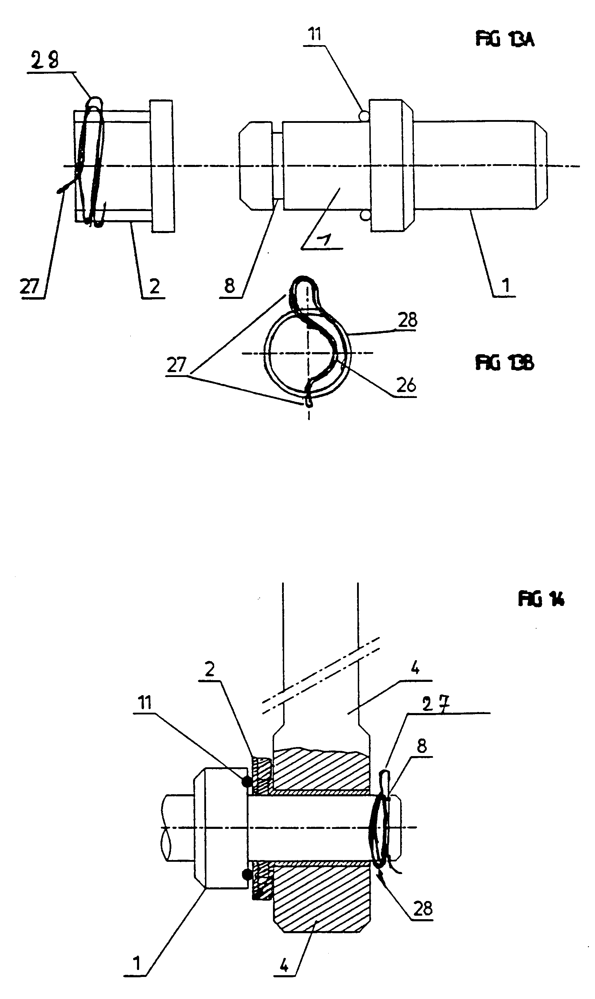

En référence à ces dessins, l'invention a pour objet de façon non limitative un dispositif de montage d'un axe (1) de pédale pourvu d'une partie lisse (5) de sorte à être reçue dans la bague de forme correspondante disposé en extrémité du bras de manivelle (4) permettant un emmanchement rapide et aisèment démontable du dit axe (1), des moyens de retenue en position de maintien effaçable étant prévus interposés entre la dite portée (5) et une partie de la bague (2) disposée dans l'évidement (3). Le dispositif de maintien de l'axe (1) dans la bague (2) du bras de manivelle peut être constitué selon les fig 1-3-11-12 d'un trou borgne (13) disposé perpendiculairement à l'axe (1) qui reçoit un élément de retenue tel qu'une bille ou une butée (14) monté sur un ressort ou bloc élastomère (12) et destinée à venir s'inserer dans un trou (7) ou un embrèvement (9), prévu à cet effet dans la bague (2), un ergot (25) permettant la compression de la butée pour le dégagement de l'axe. Dans le cas de la fig 3, où la bille (14) prend appui intérieurement à la portée, un élément de compression (7') peut être prévu dans le trou (7'') définissant en extrémité la cavitè de la bille.

Selon un autre mode de réalisation, la butée (14) positionnée en appui sur un ressort ou bloc élastomère (12) est actionnée par un ergot (25) positionné dans un trou (13') d'un diamètre permettant le déplacement du dit ergot pour pouvoir compresser le dit ressort ou bloc élastomère (12) permettant de dégager la dite butée de la bague (2) pour déverrouiller l'axe (1).

Selon la variante illustrée planche 3 et 7, le moyen de blocage rapide de l'axe peut-être avantageusement constitué d'une gorge (8) sur la portée (5) de l'axe (1), gorge (8) prévue pour recevoir extérieurement à la bague (2), une spire (27) d'un ressort ou les fourches (15) d'une agrafe (6) de maintien soit extérieurement soit par l'intermédiaire de fenêtres (29) prévues sur la bague (2), un joint torique ou ressort (11) assurent la compensation d'un jeu latéral éventuel.

Selon la variante illustrée fig 8 et 9, le moyen de blocage rapide de l'axe, peut-être avantageusement constitué d'une gorge (17) prévue entre la portée (5) de l'axe (1) et une portée (18) d'un diamètre diminué de l'épaisseur d'une agrafe pivotante (16) par rapport au diamètre de la portée (5) et dans laquelle sont prévus deux trous (19) de maintien des extrémités recourbées (20) des branches (21) de la dite agrafe. L'agrafe venant se positionner dans la gorge (17) maintient l'épaulement de la portée (5) en pression sur l'épaulement d'appui de la bague (2). Pour dégager l'axe de la bague, on amène par pivotement à 90°, l'agrafe (16) en position horizontale où elle peut alors passer à l'intérieur de la bague (2) tout en restant sur la portée (18).

Selon la variante illustrée fig 15 et 16, la portée (5) de l'axe est munie d'un trou borgne (13) de reception d'une butée (14) avec son ergot (25), d'un ressort ou bloc élastomère (12), la bague (2) est munie d'une découpe (9) de sorte que la partie supérieure de la butée (14) s'y maintienne en saillie par le ressort ou bloc élastomère (12), pour maintenir l'axe au travers de l'embrèvement (9) de la bague (2). Pour dégager l'axe, il suffit d'une pression sur l'ergot (25) qui dégage à son tour la butée (14) de la découpe (9). Un cache (22) est prévu pour protéger et maintenir la butée et son ressort dans l'évidement (13). Un index ou repère (24) est prévu sur l'axe (1) et sur la bague (2) au niveau des épaulements pour faciliter le positionnement en vis à vis.

## Revendications

1. Dispositif de montage et de démontage rapide d'une pédale sur une manivelle (4) de type standard comportant un évidement cylindrique fileté de section circulaire, ladite pédale comportant un axe (1) pourvu d'une portée (5) sensiblement cylindrique, caractérisé en ce qu'une bague (2) est vissée dans l'évidement fileté de la manivelle (4), la portée (5) de la pédale étant reçue dans la bague (2) par glissement longitudinal, la bague (2) et l'axe (1) de la pédale comportant des moyens de retenue (6, 14, 16) à actionnement manuel sans outil.

2. Dispositif selon la revendication 1, dans lequel les moyens de retenue comportent sur l'axe (1) un élément de retenue (14, 25) sollicité radialement vers l'extérieur par des moyens élastiques (12), ledit élément de retenue (14, 25), à l'état monté de l'axe (1) dans ladite bague (2), fait saillie vers l'extérieur par rapport à la portée (5) dudit axe (1) dans un logement (7, 9) solidaire de ladite manivelle pour empêcher un glissement longitudinal et une rotation relative de l'axe (1) dans la bague (2), de sorte que la pédale est dégageable de la manivelle par simple poussée sur l'élément de retenue (14, 25) contre les moyens élastiques (12).

3. Dispositif selon la revendication 1, dans lequel les moyens de retenue comportent une agrafe (16) à l'extrémité de la portée (5) du côté opposé à la pédale par rapport à la bague (2), ladite agrafe étant montée pivotante entre une position de retenue perpendiculaire audit axe (1) et une position d'enlèvement de l'axe où elle est disposée axialement audit axe (1), de sorte à être dégagée au travers de la bague (2) sans nécessité de séparation entre l'agrafe (16) et l'axe (1).

4. Dispositif selon la revendication 3, dans lequel les moyens de retenue comportent en outre, au niveau de l'extrémité de l'axe de pédale à une distance au moins égale à la longueur de la bague (2), une rainure (17) prolongée par un épaulement (18) d'un diamètre inférieur à celui de la portée (5), ladite agrafe (16) étant pourvue de deux bras dont les extrémités (20) sont recourbées et viennent s'insérer dans un trou (19) prévu diamétralement en fond de la rainure de l'axe et la différence de diamètre intérieur de la bague et du diamètre extérieur de l'épaulement (18) étant au moins égale à l'épaisseur cumulée des deux branches de l'agrafe (16).

5. Dispositif selon la revendication 1, dans lequel les moyens de retenue comportent un ressort (28) sous forme de spire enroulée destinée à venir se positionner sur les filets faisant saillie de la bague (2) prévue d'une largeur supérieure à l'évidement de la manivelle et dans lequel ledit ressort (28) présente un prolongement de spire (27) selon une partie incurvée en boucle (26) destinée à venir s'insérer dans une gorge (8) prévue sur l'axe (1) au delà de l'extrémité de la bague pour assurer un maintien sans jeu et en pression.

6. Dispositif selon la revendication 1, dans lequel la bague (2) filetée, adaptable à la manivelle, comporte une partie faisant saillie de la manivelle (4) dans laquelle sont prévues deux fenêtres (29) diamétralement opposées pour permettre le passage et le blocage par rapport à la bague des deux fourches d'une agrafe (6), de maintien de l'axe (1) qui est pourvu en vis à vis sur sa portée (5), d'une gorge (8).

7. Dispositif selon la revendication 3, dans lequel l'agrafe (16) est réalisée sous forme d'un fil métallique élastique replié en U avec repli (20) en extrémité des branches de l'agrafe en U en vis à vis ; la longueur de la portée lisse de l'axe étant égale à la longueur de l'évidement de sorte que, combiné au positionnement de l'agréfe immédiatement après la portée lisse (5), les extrémités des branches de l'agrafe (16) soient en appui sur la partie opposée à la pédale de la manivelle, la rainure (17) présentant une largeur correspondant à l'épaisseur des branches de l'agrafe et la profondeur de la rainure correspondant sensiblement à la moitié de l'épaisseur du fil de l'agrafe, de sorte à permettre :
- d'une part le maintien de l'agrafe perpendiculaire au plan de la rainure en position de retenue ;
- d'autre part un pivotement autour de l'axe défini par l'alésage et les deux extrémités des branches de l'agrafe, à 90° selon un plan correspondant à l'axe de pédale.

8. Dispositif selon la revendication 4, dans lequel les branches de l'agrafe en U présentent en vue de côtés, au niveau des branches, un décrochement définissant des segments successifs disposés parallèlement et reliés au niveau du décrochement par une partie inclinée, de sorte à écarter l'extrémité de l'agrafe au niveau du fond de U, du bras de manivelle pour une facilité de manoeuvre.

9. Dispositif selon l'une quelconque des revendications précédentes, dans lequel l'axe (1) est maintenu sans jeu dans l'évidement de la manivelle par un ressort ou joint torique (11) interposé, par exemple, entre l'épaulement de l'axe et de la bague.

10. Dispositif selon la revendication 2, dans lequel l'élément de retenue est une bille (14) montée sur un ressort (12) positionné sur la portée (5) de l'axe (1) dans un alésage (113) réalisé perpendiculairement à l'axe (1), la bille (14), à l'état monté de l'axe dans l'évidement de la manivelle, étant insérée dans une cavité (7) prévue soit dans ledit évidement de la manivelle, soit latéralement et extérieurement à l'évidement du côté oposé à la pédale.

11. Dispositif selon les revendications 2, dans lequel l'axe (1) est pourvu d'un alésage borgne et transversal (13) et d'un alésage longitudinal (13') qui l'intercepte, l'élément de retenue consistant en une butée (14) positionnée dans l'alésage (13) sur un ressort (12) qui prend appui en fond d'alésage (13), un organe latéral de manoeuvre (25) étant prévu pour actionner ladite butée au travers de l'alésage (13') et ainsi l'insérer dans une découpe (9) de la bague (2).

12. Dispositif selon la revendication 10, dans lequel la cavité (7) est définie par un perçage (7'') débouchant extérieurement au bras (4) et dans lequel est prévu un organe de coulissement (7') qui est destiné à repousser la bille (14).

## Claims

1. A device for the quick mounting and removal of a pedal on a standard crank arm (4) comprising a cylindrical threaded recess of circular section, said pedal comprising a shaft (1) provided with a substantially cylindrical bearing (5), characterized in that a ring (2) is screwed into the threaded recess of the crank arm (4), said pedal bearing (5) being received by longitudinal sliding engagement within the ring (2), the ring (2) and the pedal shaft (1) comprising retaining means (6, 14, 16) manually operable without need of any tool.

2. A device according to claim 1, wherein the retaining means comprises on the shaft (1) a retaining element (14, 25), radially outwardly biased by resilient means (12), said retaining means (14, 25), when the shaft (1) is mounted in said ring (2), extends outwardly to the bearing (5) of said shaft (1) into a hole (7, 9) integral with said crank arm to prevent a longitudinal sliding and a relative rotation of the shaft (1) in the ring (2), so that the pedal is removable from the crank arm by simply pushing on the retaining element (14, 25) against the resilient means (12).

3. A device according to claim 1, wherein the retaining means comprises a fastener (16) at the end of the bearing (5) on the side opposed to the pedal relatively to the ring (2), said fastener being pivotally mounted beetween a retaining position perpendicular to said shaft (1) and a shaft removing position where said fastener is disposed axially to said shaft (1), so as to be removed through the ring (2) without need of seperation between the fastener (16) and the shaft (1).

4. A device according to claim 3, wherein the retaining means further comprises, at the end of the pedal shaft at a distance at least equal to the length of the ring (2), a channel (17) which is prolonged in a shoulder (18) of diameter less than the diameter of the bearing (5), said fastener being provided with two arms having ends (20) bent back and which are inserted in a hole (19) provided diametrically at the bottom of the channel of the shaft, and the difference in inner diameter between the ring and the outside diameter of the shoulder (18) being at least equal to the combined thickness of the two arms of the fastener (16).

5. A device according to claim 1, wherein the retaining means comprises a spiral spring (28) intended to be positioned over the external projecting threads of the ring (2) whose breadth is greater than that of the recess in the arm, and wherein said spring (28) is prolonged by a spiral extension (27) in the form of a curved loop (26) intended to be inserted in a groove (8) provided on the shaft (1) beyond the end of the ring to ensure the shaft is held under pressure and without any play.

6. A device according to claim 1, wherein the threaded ring (2) which is adaptable to the crank arm, comprises a portion which stands proud of the crank arm (4) and in which two diametrically opposed windows (29) are provided which allow two forks of a fastener (6) for holding the shaft (1) to pass through and be clamped onto the ring, the bearing (5) of the shaft being provided with a cooperating groove (8).

7. A device according to claim 3, wherein the fastener (16) is a resilient metallic wire folded in a U with a fold (20) at the end of the arms of the U-shaped fastener so that the ends are facing; the length of the smooth bearing of the shaft being equal to the length of the recess so that, combined with positioning of the fastener immediately after the smooth bearing (5), the ends of the arms of the fastener (16) bear against the portion of the crank arm opposed to the pedal, the breadth of the channel (17) corresponding to the thickness of the fastener arms and the depth of the channel corresponding substantially to half the thickness of the wire of the fastener so as to allow:
- firstly, the fastener to be held perpendicular to the plane of the channel in the retained position; and
- secondly, pivoting by 90° in a plane corresponding to the pedal shaft, about the axis defined by the bore and the two ends of the arms of the fastener.

8. A device according to claim 4, wherein viewed from the side at the position of the arms, the arms of the U-shaped fastener present a set-back portion defining successive segments arranged in parallel and connected to one another at the set-back by a portion inclined so as to separate the end of the fastener at the base of the U, from the crank arm so as to facilitate operating.

9. A device according to any one of the preceeding claims, wherein the shaft (1) is held without play in the crank arm recess by a spring or an O-ring (11) interposed for example between the shoulder of the shaft and of the ring.

10. A device according to claim 2, wherein the retaining element is a ball (14) mounted on a spring (12) positioned on the bearing (5) of the shaft (1) into a bore (13) realised perpendicularly to the shaft (1), the ball (14), in the mounted state of the shaft within the crank arm recess, being inserted into a cavity (7) provided either in said crank arm recess, or laterally and outwardly to the recess on the side opposed to the pedal.

11. A device according to claim 2, wherein the shaft (1) is provided with a blind and transversal bore (13) and a longitudinal bore (13') which crosses it, the retaining element being a stop (14) positioned within the bore (13) on a spring (12) bearing against the bottom of the bore (13) a lateral operating member (25) being provided for actuating said stop through the bore (13') and thus inserting it into a cut-out (9) of the ring (2).

12. A device according to claim 10, wherein the cavity (7) is defined by a drilling (7'') which opens onto the exterior of the arm (4) and in which a sliding member (7') is provided to push away the ball (14).

## Patentansprüche

1. Einrichtung zur schnellen Montage und Demontage eines Pedals an einer Kurbel (4) vom Standardtyp, welche eine zylindrische Gewindeausnehmung mit Kreisquerschnitt aufweist, wobei dieses Pedal eine Achse (1) aufweist, die mit einem im wesentlichen zylindrischen Lagerfortsatz (5) ausgestattet ist, dadurch **gekennzeichnet**, daß eine Buchse (2) in die Gewindeausnehmung der Kurbel (4) eingeschraubt ist, wobei der Lagerfortsatz (5) des Pedals durch Längseinschieben in der Buchse (2) aufgenommen ist, und wobei die Buchse (2) und die Achse (1) des Pedals Sicherungsmittel (6, 14, 16) für eine manuelle Betätigung ohne Werkzeug aufweisen.

2. Einrichtung nach Anspruch 1, bei welcher die Sicherungsmittel an der Achse (1) ein Sicherungselement (14, 25) aufweisen, welches durch elastische Mittel (12) radial nach außen vorgespannt ist, wobei dieses Sicherungselement (14, 25) bei in dieser Buchse (2) montierter Achse (1) gegenüber dem Lagerfortsatz (5) dieser Achse (1) nach außen in eine mit dieser Kurbel fest verbundene Aufnahme (7, 9) ragt, um eine relative Längsverschiebung und eine Drehung der Achse (1) in der Buchse (2) zu verhindern derart, daß das Pedal von der Kurbel durch einfaches Drücken auf das Sicherungselement (14, 25) gegen die elastischen Mittel (12) lösbar ist.

3. Einrichtung nach Anspruch 1, bei welcher die Sicherungsmittel an dem Ende des Lagerfortsatzes (5), welches auf der hinsichtlich der Buchse (2) dem Pedal abgewandten Seite liegt, eine Spange (16) aufweist, wobei diese Spange zwischen einer zu dieser Achse (1) senkrechten Sicherungsposition und einer Position zum Abnehmen der Achse, bei der sie zu dieser Achse (1) axial angeordnet ist, schwenkbar gelagert ist derart, daß diese durch die Buchse (2) hindurch ohne die Notwendigkeit einer Trennung zwischen der Spange (16) und der Achse (1) gelöst werden kann.

4. Einrichtung nach Anspruch 3, bei welcher die Sicherungsmittel außerdem im Bereich des Endes der Pedalachse in einem der Länge der Buchse (2) wenigsten gleichen Abstand eine Nut (17) haben, die durch eine Schulter (18) verlängert ist, welche einen gegenüber dem des Lagerfortsatzes (5) kleineren Durchmesser hat, wobei diese Spange (16) mit zwei Armen ausgestattet ist, deren Enden (20) eingebogen sind und in ein Loch (19) eingreifen, welches am Grund der Nut der Achse diametral angeordnet ist, und wobei der Unterschied des Innendurchmessers der Buchse sowie des Außendurchmessers der Schulter (18) wenigstens gleich der zusammengerechneten Dicke der beiden Arme der Spange (16) ist.

5. Einrichtung nach Anspruch 1, bei welcher die Sicherungsmittel eine Feder (28) in der Form einer aufgerollten Spiralwindung aufweisen, die dazu bestimmt ist, auf die Gewindegänge aufgelegt zu werden, die über die Buchse (2), welche mit einer gegenüber der Ausnehmung der Kurbel größeren Breite versehen ist, überstehen, und bei welcher diese Feder (28) eine Windungsverlängerung (27) entsprechend einem zu einer Schlinge (26) gebogenen Abschnitt aufweist, die dazu bestimmt ist, in eine an der Achse (1) jenseits des Endes der Buchse vorgesehene Nut (8) einzugreifen, um einen Halt ohne Spiel und unter Druck zu gewährleisten.

6. Einrichtung nach Anspruch 1, bei welcher die an die Kurbel adaptierbare Gewindebuchse (2) einen über die Kurbel (4) überstehenden Abschnitt hat, an welchem zwei einander diametral gegenüberliegende Fenster (29) vorgesehen sind, um den Durchtritt und die Blockierung bezüglich der Buchse von zwei Gabelteilen einer Spange (6) zum Halten der Achse (1) zu ermöglichen, die gegenüberliegend auf ihrem Lagerfortsatz (5) mit einer umlaufenden Nut (8) versehen ist.

7. Einrichtung nach Anspruch 3, bei welcher die Spange (16) in der Form eines elastischen, zu einem U gebogenen Drahtes mit jeweils einer Umbiegung (20) am Ende der Schenkel der U-förmigen Spange ausgeführt ist, welche einander gegenüberliegen; wobei die Länge des glatten Lagerfortsatzes der Achse der Länge der Ausnehmung gleich ist derart, daß in Verbindung mit der Positionierung der Spange unmittelbar nach dem glatten Lagerfortsatz (5) die Enden der Schenkel der Spange (16) an dem dem Pedal abgewandten Bereich der Kurbel anliegen, und wobei die Nut (17) eine Breite aufweist, die der Dicke der Schenkel der Spange entsprechen, und wobei die Tiefe der Nut im wesentlichen der Hälfte der Dicke des Spangendrahtes entspricht, so daß folgendes ermöglicht wird:
- einerseits das Halten der Spange senkrecht zur Nutebene in der Sicherungsposition;
- andererseits eine Schwenkung um die durch die Bohrung und die beiden Enden der Spangenschenkel definierte Achse um 90° in eine Ebene, die der Pedalachse entspricht.

8. Einrichtung nach Anspruch 4, bei welcher die Schenkel der U-förmigen Spange in einer Seitenansicht im Bereich dieser Schenkel einen Versatz aufweisen, welcher hintereinander angeordnete Segmente definiert, die zueinander parallel und im Bereich des Seitenversatzes durch einen geneigten Abschnitt miteinander verbunden sind derart, daß das Ende der Spange im Bereich der Basis des U für eine Erleichterung der Betätigung einen Abstand vom Kurbelarm erhält.

9. Einrichtung nach einem der vorangehenden Ansprüche, bei welcher die Achse (1) in der Ausnehmung der Kurbel spielfrei mittels einer Feder oder einer Ringdichtung (11) gehalten wird, die beispielsweise zwischen der Schulter der Achse und der Buchse angeordnet ist.

10. Einrichtung nach Anspruch 2, bei welcher das Sicherungselement eine Kugel (14) ist, welche auf einer an dem Lagerfortsatz (5) der Achse (1) in einer Bohrung (113) angeordneten Feder (12) montiert ist, die senkrecht zur Achse (1) ausgebildet ist, wobei die Kugel (14) bei in der Ausnehmung der Kurbel montierter Achse in eine Vertiefung (7) eingreift, die entweder in dieser Ausnehmung der Kurbel oder seitlich und außerhalb der Ausnehmung an der dem Pedal abgewandten Seite vorgesehen ist.

11. Einrichtung nach den Ansprüchen 2, bei welcher die Achse (1) mit einer blinden und querverlaufenden Bohrung (13) versehen ist sowie mit einer längsverlaufenden Bohrung (13'), welche diese schneidet, wobei das Sicherungselement aus einem Anschlag (14) besteht, welcher in der Bohrung (13) auf einer Feder (12) angeordnet ist, welche sich am Boden der Bohrung (13) abstützt, und wobei ein seitliches Betätigungsorgan (25) vorgesehen ist, um diesen Anschlag durch die Bohrung (13') hindurch zu betätigen und so in einen Ausschnitt (9) der Buchse (2) einzuführen.

12. Einrichtung nach Anspruch 10, bei welcher die Vertiefung (7) durch eine Bohrung (7'') definiert ist, die außerhalb des Armes (4) mündet und in welcher ein Verschiebeorgan (7') vorgesehen ist, welche dazu dient, die Kugel (14) zurückzudrücken.
